(19) Europäisches Patentamt
European Patent Office
Office européen des brevets

(11) EP 1 540 752 B1

(12) EUROPEAN PATENT SPECIFICATION

(45) Date of publication and mention of the grant of the patent:
**31.03.2010 Bulletin 2010/13**

(21) Application number: **03788901.1**

(22) Date of filing: **11.09.2003**

(51) Int Cl.:
***H01M 4/02*** *(2006.01)* ***H01M 4/58*** *(2010.01)*
***H01M 4/48*** *(2010.01)*

(86) International application number:
**PCT/EP2003/010138**

(87) International publication number:
**WO 2004/034489 (22.04.2004 Gazette 2004/17)**

(54) **NOVEL ELECTRODES FOR LI-BASED ELECTROCHEMICAL ENERGY STORAGE DEVICES AND A LI-BASED ELECTROCHEMICAL STORAGE DEVICE**

NEUE ELEKTRODEN FÜR ELEKTROCHEMISCHE SPEICHER AUF LITHIUMBASIS UND ELEKTROCHEMISCHE SPEICHER AUF LITHIUMBASIS

NOUVELLES ELECTRODES POUR APPAREILS DE STOCKAGE D'ENERGIE ELECTROCHIMIQUE A BASE DE LITHIUM ET APPAREIL DE STOCKAGE ELECTROCHIMIQUE A BASE DE LITHIUM

(84) Designated Contracting States:
**AT BE BG CH CY CZ DE DK EE ES FI FR GB GR HU IE IT LI LU MC NL PT RO SE SI SK TR**

(30) Priority: **13.09.2002 DE 10242694**

(43) Date of publication of application:
**15.06.2005 Bulletin 2005/24**

(60) Divisional application:
**10001362.2**

(73) Proprietor: **Max-Planck-Gesellschaft zur Förderung der Wissenschaften e.V.**
**80539 München (DE)**

(72) Inventors:
- **BALAYA, Palani**
  **70174 Stuttgart (DE)**
- **LI, Hong**
  **100080 Beijing (CN)**
- **MAIER, Joachim**
  **75446 Wiernsheim (DE)**

(74) Representative: **Manitz, Finsterwald & Partner GbR**
**Martin-Greif-Strasse 1**
**80336 München (DE)**

(56) References cited:
**EP-A- 0 249 118** **EP-A- 0 393 379**
**EP-A- 0 817 294** **WO-A-99/40029**
**WO-A-03/030283** **GB-A- 2 113 457**
**US-A- 4 515 875** **US-A- 5 554 457**
**US-A1- 2003 073 003** **US-B1- 6 346 348**
**US-B1- 6 511 773**

- **PATENT ABSTRACTS OF JAPAN vol. 2000, no. 08, 6 October 2000 (2000-10-06) & JP 2000 128539 A (UBE IND. LTD.), 9 May 2000 (2000-05-09)**
- **PATENT ABSTRACTS OF JAPAN vol. 1997, no. 06, 30 June 1997 (1997-06-30) & JP 9 055201 A (NIPPON TELEGR. & TELEPH. CORP.), 25 February 1997 (1997-02-25)**
- **PATENT ABSTRACTS OF JAPAN vol. 0071, no. 36 (E-181), 14 June 1983 (1983-06-14) & JP 58 051472 A (HITACHI MAXELL LTD.), 26 March 1983 (1983-03-26)**
- **PATENT ABSTRACTS OF JAPAN vol. 2000, no. 21, 3 August 2001 (2001-08-03) & JP 2001 110447 A (SHARP CORP.), 20 April 2001 (2001-04-20)**
- **PATENT ABSTRACTS OF JAPAN vol. 2000, no. 07, 29 September 2000 (2000-09-29) & JP 2000 106174 A (MATSUSHITA ELECTRIC IND. CO. LTD.), 11 April 2000 (2000-04-11)**
- **PATENT ABSTRACTS OF JAPAN vol. 2000, no. 12, 3 January 2001 (2001-01-03) & JP 2000 243453 A (NISSAN MOTOR CO. LTD.), 8 September 2000 (2000-09-08)**
- **PATENT ABSTRACTS OF JAPAN vol. 1997, no. 02, 28 February 1997 (1997-02-28) & JP 8 279357 A (SANYO ELECTRIC CO. LTD.), 22 October 1996 (1996-10-22)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- **PATENT ABSTRACTS OF JAPAN vol. 1999, no. 03, 31 March 1999 (1999-03-31) & JP 10 321228 A (NIPPON TELEGR. & TELEPH. CORP.), 4 December 1998 (1998-12-04)**
- **BARKER J. ET AL.: "Lithium insertion properties of the layered LiMoO2 (R3m) made by a novel carbothermal reduction method" SOLID STATE IONICS, vol. 158, no. 3-4, March 2003 (2003-03), pages 261-267, XP004412993 ISSN: 0167-2738**

## Description

The present invention relates to novel electrode materials for Li-based electrochemical energy storage devices and to a Li-based electrochemical storage device.

Lithium batteries are known in non-rechargeable and in rechargeable form. Such batteries comprise positive and negative electrodes with a non-aqueous electrolyte disposed between them. In a rechargeable lithium ion battery (secondary battery) the positive electrode of the battery can for example be $LiCoO_2$ (referred to as the "cathode" in Li-battery community) and the negative electrode can for example be carbon (referred to as the "anode" in Li-battery community). In a non-rechargeable battery (primary battery) the positive electrode can for example be $MnO_2$ and the negative electrode can be lithium metal.

In the state of the art, lithium-ion batteries and $RuO_2$ proton-type supercapacitors are used for rechargeable electrochemical storage devices. Among current commercial Li-ion batteries, when carbon is used as an anode material, the Li-storage capacity is less than 372 mAh/g. When $LiCoO_2$ is used as the cathode material it has a capacity less than 150 mAh/g. For $RuO_2$ proton-type supercapacitors, the highest capacitance is reported as 1200 F/g, less than 200 mAh/g.

Various different types of electrolyte are known. For example there is the class of liquid electrolytes comprising at least one ionically conducting salt such as Li(TFSI), i.e. lithium bis(trifluorosulphonyl)imide, $LiPF_6$, i.e. lithium hexafluorophosphate or $LiClO_4$, i.e. lithium perchlorate which are present, with a low degree of association, within a non-aqueous solvent such as a mixture of DME (dimethylethane) and EC (ethylene carbonate), a mixture of DEC (diethylene carbonate) and EC, or a mixture of DMC (dimethyl carbonate) and EC or PC (propylene carbonate) or combinations thereof.

In addition there are so-called dry polymer electrolytes. In these electrolytes the salt is selected as before (i.e. for example from Li(TFSI), $LiPF_6$ or $LiClO_4$) and is dispersed in a polymer or mixture of polymers. Suitable polymers comprise PEO (polyethylene oxide), PVDF (polyvinylene difluoride), PAN (polyacrylonitrile), and PMMA (polymethyl methyl acrylate).

Furthermore, there are so called polymer gel electrolytes. These have the same basic composition as the dry polymer electrolytes recited above but include a solvent, for example a solvent of the kind recited in connection with the liquid electrolytes given above.

The known liquid electrolytes described have the advantage that they have a high ionic conductivity up to a transference number of 0.6 and a high conductivity of $10^{-2}$ S/cm. In addition the liquid properties ensure good wetting of the electrode surface. They are however dangerous because leakage can occur, so that safety considerations arise. In addition they can lead to passivation effects which are undesirable.

The dry polymer electrolytes do not result in good wetting of the electrodes, the conductivities which can be achieved are quite low and there is also not much scope for modifying the chemical composition of the ingredients. However, the electrolytes are good safety-wise and no leakage occurs.

With the polymer gel electrolytes the change in liquid content results in reductions in the conductivity and there is also the danger of leakage.

An improved electrolyte is described in EP-A-1505680 assigned to the present applicants. In accordance with the above referenced European application there is provided:

a non-aqueous electrolyte including

- at least one ionically conducting salt, especially a lithium salt,
- a non-aqueous, anhydrous solvent for the ionically conductive salt, said solvent being selected to achieve a degree of dissociation of the ionically conductive salt in the non-aqueous solvent,
- at least one oxide in a particulate form, said oxide being selected such that it is not soluble in said solvent and such that it is water-free.

It has namely been found that the addition of fine oxide particles, e.g. in powder or elongate particle form, leads to a substantial increase in conductivity but with no disadvantages.

The electrolyte preferably has a low degree of dissociation, preferably with an association constant in the range from 1 x $10^{-1}$ to $10^8$ /$1^{-1}$.mol$^{-1}$.

When used in a primary or secondary lithium battery having positive and negative electrodes, the oxide should be selected such that it does not react with the material of either of said positive and negative electrodes.

The non-aqueous electrolyte described in the above referenced European application is not restricted to use in a battery, it can for example be used in a supercapacitor, in electrochromic devices such as electro-chromic displays or in a solar energy cell.

In the non-aqueous electrolyte described in EP-A-1505680 the ionically conductive salt is selected from the group comprising Li(TFSI), $LiPF_6$ and $LiClO_4$.

Moreover, the non-aqueous, anhydrous solvent is preferably selected from the group comprising DEC/EC, DMC/EC, PC, carbonate based solvents related to any of the foregoing, DMSO, organic sulphur compounds, THF, AN and mixtures of any of the foregoing.

The oxide used is preferably selected from the group comprising oxides exhibiting acidic properties, for example $SiO_2$ $TiO_2$ and oxides exhibiting basic properties, for example $Al_2O_3$, MgO and any mixtures thereof.

The average particle size of the oxide for particles of approximately spherical shape, is selected to be less than 5 μm and preferably less than 2 μm, with no lower limit other than that set by manufacturing techniques used to produce said oxide. For elongate particles, such as nano-wires or nano-tubes, the average diameter is selected to be less than 1 μm, preferably less than 100 nm, there being no limit on the length of such elongate particles.

The amount of oxide present in the electrolyte is preferably such as to give the electrolyte a consistency between that of a liquid and a solid, preferably a consistency similar to that of a soggy sand, i.e. a liquid and sand mixture having a consistency such that sedimentation effects do not occur.

The above electrolytes can all be used with the electrodes and in the electrochemical storage device of the present invention.

Due to the rapid development of the electronic industries, there is a great demand to increase further the energy density of electrochemical energy storage devices, leading to great interest in novel electrode materials.

Accordingly, the object of the present invention is to provide novel materials which permit a significant improvement in the electrochemical performance of Li-based electrochemical energy storage devices and electrodes for such Li-based electrochemical energy storage devices.

In order to satisfy this object, there are provided, in accordance with the invention, the electrodes of claims 1 and 2 and the Li-based electrochemical storage device of claims 3 and 4.

The applicants have namely found that the transition metal halides, in particular the fluorides, can be used for Li-based electrochemical energy storage devices over a wide voltage range, for example from 0 to 4.3 V, and that they show large Li-storage capacities and good cyclic performance.

Furthermore, it has also been found that amorphous composites consisting of metal clusters of a transition metal and LiF dispersed at an atomic scale or at a nanometer scale also show high reversible Li-storage behaviour.

More specifically, the following advantages can be achieved:

When the transition metal fluorides (the metal comprising one or more of the transition metals Ti, V, Cr, Ni, Mn, Fe, Co, Cu) is used as an active electrode material in an Li-based electrochemical energy storage device, high reversible capacities >500 mAh/g and sufficient cyclic performance over a wide voltage range, typically from 0-4.3V are achieved. Some transition metal fluorides show high voltage as high as 3.5 V, such as $CoF_3$ and $CuF_2$.

The document JP 2000-128539A discloses a positive electrode material in the form of a lithium-containing transition metal having the formula $Li_aM_bO_cX_d$ where M = Cr, Mn, Fe, Co, Ni and X as a halogen. According to the Japanese specification the following relations exist: $0.2 \leqq a \leqq 1.2$, $0.8 \leqq b \leqq 1$, $0.7 \leqq c \leqq 2$, $0 \leqq d \leqq 0.3$. This makes it clear that this material is a compound and not a $Li_x$-M amorphous composite or nano-composite in accordance with the present teaching.

Moreover, the compound material of this Japanese reference is present with a particle size in the micron range and the particle surfaces are covered with a crystalline metallic halide of the formula $NX_a$ where N = Li, Mg, Al, Ca, Ti, V, Cr, Mn, Fe, Co, Ni and X is again a halogen. In this case "a" is an integer. This metal halide coating is in fact used in the reference as a protective layer, it is not itself involved in the electro-chemical reaction which takes place in a lithium battery.

This is what is called an insertion reaction and this means that there is no morphological change in the compound LiCrOF. I.e. there is no change in morphology and the size of the particles of the compound LiCrOF remains the same. When using the lithium battery this type of reaction leads to a relatively low storage capacity typically less than 200 mA hours/g of the material of the positive electrode.

EP-A-0817294 discloses is a battery having a positive electrode for example $LiCoO_2$ and a negative electrode in the form of a chalcogenide, e.g. $SnAl_{0.4}B_{0.5}P_{0.5}K_{0.1}O_{3.65}$.

This battery operates by way of an insertion reaction as follows.

$$LiCoO_2 \rightarrow \text{lithium extraction and insertion} \rightarrow Li_{0.5}SnAl_{0.4}B_{0.3}P_{0.5}K_{0.1}O_{3.65}$$

$$\downarrow$$

$$Li_{0.5}CoO_2$$

Since only 0.5 Li can be inserted, the capacity is limited to less than 200 mA hours/g.

JP2001-110447A describes a lithium secondary battery containing solid electrolytes, whose compositions are different, between a positive and a negative electrode and also contains a solid electrolyte layer between both electrodes, where the solid electrolyte layer is formed of a composition that is different from those of the positive and negative electrode.

JP2000-106174A describes a positive electrode with an active material such as $LiCoO_2$ or $LiMn_2O_4$ with $MoO_3$ added as a small dopant in an amount of 10 to 10000 ppm, i.e. at most 1 % by weight. In this reference the $MoO_3$ is only added to avoid corrosion of the metal collector its electrical effect would go unnoticed.

US-B-6346348 is concerned with a positive electrode $Li_xMyMo_{1-y}O_3$ where M is Al, Ti, V, Mn, Co, Ni, Fe and Nb and $0.7 \leq x \leq$ to 2.2 and $O \leq y \leq 0.5$.

This is again a compound which operates by the insertion reaction.

JP 8 279 357A relates to a positive electrode comprising a lithium transition metal composite oxide, for example $LiCO_2$ or $LiMn_2O_4$ and a metal selected from the group composed of lead, molybdenum, bismuth, cadmium; thallium, tin, copper, indium, germanium, tungsten, antimony, titanium, rhenium, ruthenium, osmium, rhodium, iridium, palladium, platinum, silver, gold, and mercury, which is stuck on a surface of the lithium transition metal composite oxide. The metal is used only for improving the cyclic performance "by a restraining reaction between the lithium transition metal composite oxide and the electrolyte on a positive electrode surface of a lithium secondary battery and an action of restraining decomposition of the electrolyte".

JP 10 321 228A is very similar to JP 8 279 357A.

Finally WO99/49929A is concerned with the manufacture of lithium transition metal mixtures of the general formula $Li_x(M^1yM^21\text{-}y)nO_{nz}$, where $M^1$ is nickel, cobalt or manganese, $M^2$ is a transition metal different from $M^1$ and signifies chromium, cobalt, iron, manganese, molybdenum and/or aluminium with some the special conditions being placed on n, x, y and z. This class of compounds is quite different from the LiX-M amorphous composite or nanocomposite of the present teaching.

WO99/40029A does not specifically say how the lithium-transition metalates described there are to be used in a secondary lithium battery, however, the class of compounds is typical of compounds which are used for insertion reactions.

The invention will now be described in more detail with reference to specific embodiments and measurements with reference to the accompanying drawings.

In the drawings there are shown:

| | |
|---|---|
| Fig. 1 | a schematic illustration of a commercial Li-ion battery, |
| Figs. 2A-F | discharge and charge curves of fluorides/Li-cells (with $I_o$ = 0.2 mA/cm$^2$ if not mentioned), |
| Fig. 3 | Ex situ micro-Raman spectra of TiF3B electrodes. $\lambda$ = 632.8 nm, 20x lens, |
| Figs. 4A-B | Ex situ micro-Raman spectra (Fig. 4A) and XRD patterns (Fig. 4B) of $VF_3$ electrodes at different Li-insertion states, |
| Figs. 5A-E | HRTEM images of $TiF_3$ electrode at different states, namely |
| Fig. 5A | original; |
| Fig. 5B | discharged to 0.4 V |
| Fig. 5C | discharged to 0.0 V |
| Fig. 5D | charged to 3.0 V |
| Fig. 5E | charged to 4.3 V |
| Fig. 6 | An ESR plot showing ESR spectra of $TiF_3$A electrode at different Li-inserted states which suggests that with insertion of Li ion, the chemical state of Li in a product of the reaction (II) is approaching to metal Li, and |
| Fig. 7 | the ESR plots of Fig.6 in overlapped form to show intensity variation, with T = 100K, Q= 3100, Attenuation: 25, P: 0.638 mW, |

Fig. 8 a schematic illustration of an experimental cell,

Fig. 9 a diagram illustrating the rate performance of a $TiF_3$/Li cell in a low voltage range and

Fig. 10 a diagram showing the interfacial charging mechanism for Li-storage at grain boundaries between M and LiF nano-grains or nano-clusters.

Referring first of all to Fig. 1 there is shown a diagram illustrating the basic configuration of a button type Li-ion battery of the commercially available kind typically comprises an anode (in this case a carbon anode) 10, a cathode 12, in this case $LiCoO_2$ and an electrolyte 14 disposed in the space between the anode 10 and the cathode 12.

Present throughout the volume of the electrolyte are also lithium ions 16 shown as circles with a cross in the middle, and anions 18 shown as larger circles with a single line through the middle. When an external circuit is connected to the battery, current flows in the direction opposite to the arrow 20 during discharging and in the direction of the arrow during charging.

It has already been established by others that transition metal oxides, more specifically the oxides Fe, Ni, Co, Cu, show promising performance as anode materials for rechargeable lithium batteries. The reversible Li-storage mechanism is due to the formation and decomposition of $Li_2O$ upon the electrochemical insertion/extraction of Li (see references 1 and 2). The key point for the reversibility is related to be the formation of a special microstructure in which metal clusters are dispersed uniformly with $Li_2O$ at a nanoscale after electrochemical reaction of metal oxide with Li (again reference is made to the references 1 and 2).

The present applicants had the idea that LiF, which is electrochemically inactive, might be able to show electrochemical activity when it is dispersed with a transition metal at an atomic or nanoscale level. A series of transition metal fluorides ( M = Ti, V, Mn, Fe, Co, Ni, Cu) have been investigated and the present description shows the results on $TiF_3$ and $VF_3$ as examples. $SnF_2$ and (CFx)n, where x=1 and n is an integer are also presented for comparison purposes.

The experimental setup was as follows:

An experimental cell in accordance with Fig. 8 was used. In this cell the reference numeral 30 represents a copper cylinder with a base 31 which can be screwed into the cylinder to apply pressure to the contents. Reference numeral 32 refers to a Teflon cylinder disposed within the copper cylinder and provided with an end plate 33. Reference numeral 34 is a stainless plate connected to a lead 36, 38 is a stainless steel plate acting as a current collector, 40 is an anode electrode, 42 is a separator (e.g. Celgrad 2300) rinsed with a non-aqueous electrolyte, 44 is a cathode electrode, 46 is a stainless steel plate acting as a current collector and 48 is a further stainless steel plate connected to a lead 50.

The working electrodes 40 and 44 comprised either **TiF3A:** $TiF_3$: PVDF (9:1 by weight) on Ti foil or **TiF3B:** $TiF_3$: CB: GP: PVDF (10:0.5:0.5:1 by weight) on Ti foil. Throughout this specification and drawings CB denotes carbon black, GP denotes graphite and PVDF denotes polyvinylene difluoride. The pasting procedures for the electrode film are similar to those reported in H. Li, L. H. Shi, W. Lu, X. J. Huang, L. Q. Chen, J. Electrochem. Soc., 148, A915(2001). It is noted that $TiF_3$ is a commercially available powder with a powder size generally in the range from 300nm to 5$\mu$m. This size is however not critical. CB is usually available with a particle size up to 40nm and GP with a particle size in the range from 1 to 1.0 $\mu$m. Again these particle sizes are not critical.

Thus the electrochemical cells tested were 2-electrode cells for electro-chemical testing as illustrated in Fig.8 and similar in layout to the known cell of Fig. 1 but using the alternative electrodes. It is noted that the electrode materials proposed and claimed here can be used as either anodes or cathodes depending on the relative potential difference to the metal lithium. If this potential difference is 2.5 volts or less then the material is considered suitable as an anode material. If the potential difference is 2.5 volts or more then the material is considered suitable as a cathode material.

The electrolyte was:

1M $LiPF_6$, EC-DMC(1:1), Merck , i.e. 1 molar lithium phosphorous fluoride 6, ethylene carbonate-dimethyl carbonate available from Merck, and the investigation was carried out using HRTEM and micro-Raman with procedures similar to those described in the papers by H. Li, X. J. Huang, L. Q. Chen, Electrochem. Solid State Lett., 1, 241 (1998) and H. Li, Y. Mo, N. Pei, X. Xu, X. J. Huang, and L. Q. Chen, J. Phys. Chem. B 104, 8477(2000).

The special electrochemical cell described with reference to Fig. 8 was designed for the control of the Li-insertion state and for a subsequent pseudo in-situ ESR experiment. The interference from the electrolyte and Li electrode can be avoided. The TiF3A type electrode was used for ESR and HRTEM and the TiF3B type electrode was used for micro-Raman.

Various examples of electrodes will now be described with reference amongst other things to Figs. 2A to 2F which show the discharge and charge curves that were achieved for Li cells utilising $TiF_3$ electrodes (Figs. 2A and 2B) and $VF_3$ electrodes (Figs. 2C and 2D) and also for $SnF_2$ electrodes (Fig. 2E ) and (CFx)n electrodes (Fig. 2F).

Example 1

Fig. 2A shows a voltage capacity diagram of a first example of a Li-cell using TiF3B as the cathode and metal lithium as the anode together with the specific electrolyte described above. The diagram shows a typical series of charging and discharging cycles for a Li-cell. It can be seen that, as is usual for an Li-cell the discharging capacity reduces from a value of almost 1000 mAh/g at the first cycle to a steady state value of over 500 mAh/g. Similarly, the charge capacities achieve a steady value of over 500 mAh/g. The electrode composition of the $TiF_3$ material of the electrode changes into a mixture of LiF and Ti during this discharging and transforms back to $TiF_3$ during charging process. It is this which results in the reversible capacity.

Example 2

Fig. 2B shows an example similar to that of example 1 but using TiF3A as the anode material. The family of curves is generally similar to that of Fig. 2A but the reversible capacity achieved reduces to a value of 220 mAh/g. Although this is still a good value it is not as good as that of example 1 where the electrode material contains the conductive additives of carbon black and graphite.

Example 3

Fig. 2C shows an example in which the electrode material of the anode is a mixture of $VF_3$: CB : GP :PVDF in the ratio 10 : 1 : 1: 1 with components $VF_3$ CB and GP being in the form of powders (particle size of $VF_3$ is 200 nm, CB is typically up to 40 nm and GP has a particle size of 1 to 10μm - again these sizes are not critical). The powders are mixed with PVDF to form a fine paste deposited on a Ti foil. Again the family of curves for the charge and discharge cycles shows that after the battery has settled down a reversible capacity of about 540 mAh/g can be achieved.

Example 4

Fig. 2D shows an example similar to Fig. 2C but at different discharging and charging rate. The family of curves shows that a useful reversible capacity of 450 mAh/g can be achieved at current density of 0.5 C and 400 mAh/g at 1C. This example shows that the electrode materials of fluorides can also show good rate performance.

Comparative Example 5

Fig 2E shows the family of curves achievable for an anode material comprising $SnF_2$ : CB : GP : PVDF in the ratio 10 : 1 :1: 1. Here $SnF_2$, CB and GP are mixed with PVDF as a binder and deposited on a Ti foil. The family of curves shows a reversible capacity of 140 mAh/g which is well below the levels achieved in the previous examples.

Comparative example 6

Fig. 2F shows the family of curves achievable for an anode material comprising a mixture of $(CF_x)_n$ and PVDF where x is 1 and n means a polymer. The mixture is made in the ratio 10 : 1 and deposited on a Ti foil. The reversible capacity after a plurality of charging and discharging cycles has reduced to about 200 mAh/g.

The voltage profile of the discharge curves exhibits plateau region at high voltage and slope region at low voltage. The capacity of the plateau region is close to the theoretical capacity of decomposition reaction of fluorides, which is reversible in the cases of $TiF_3$ and $VF_3$. The slope regions for $SnF_2$, $TiF_3$ and $VF_3$ are also reversible, but the former is caused by the Li-Sn alloy reaction (see reference 5), while later (about 250 mAh/g) is related to the insertion of Li into the matrix of LiF/M. Interestingly, (CFx)n also shows partial reversibility. The theoretical capacity and voltage for the decomposition reactions (Plateau region) are as follows:

$TiF_3$: 767 mAh/g, 1.396 V; $VF_3$: 745 mAh/g, 1.863 V;
$SnF_2$: 342 mAh/g, 2.984V; (CFx)n, x=1865 mAh/g, 2.9V.

The results of Raman spectroscopy and XRD investigations are shown in Figs. 3 and 4.

In Fig. 3 phase transitions are observed from the crystal to the amorphous state with Li insertion and back to the original phase with Li extraction.

Fig. 4 shows ex situ Raman spectra (Fig. 4A) and and XRD patterns (Fig. 4B) of $VF_3$ electrodes at different Li insertion states.

Turning now to Fig. 5 there are shown HRTEM images of $TiF_3$ electrodes at different states. The five states,

Fig. 5A to Fig. 5E are as follows:

5A: Original; 5B: discharged to 0.4 V; 5C: discharged to 0.0 V;
5D: charged to 3.0 V; and 5E: charged to 4.3 V.

The crystal parameters are as follows:

$TiF_3$: Rhombohedral, $d_{110}$: 0. 388 nm, $d_{101}$: 0.274 nm, $d_{210}$: 0.233nm, $d_{200}$: 0.223nm
Ti: Hexagonal, $d_{010}$: 0. 256 nm, $d_{002}$: 0.234 nm, $d_{011}$: 0.224nm.
Li: Cubic, $d_{110}$: 0.248 nm, $d_{200}$: 0.176 nm.
LiF: Cubic, $d_{111}$: 0.233 nm, $d_{200}$: 0.201 nm;

Figs. 6 and 7 show ESR spectra of the TiF3A electrode at different Li-inserted states (Fig. 6) and the same diagrams overlapped (Fig. 7) to show intensity variation. The following parameters apply here:

**T= 100 K, Q=3100, Attenuation: 25, P: 0.638 mW,**

The ESR results suggest that with insertion of Li ions, the chemical state of Li in the product of the reaction (II) is approaching to metal Li.

From these results, the following conclusions can be drawn:

1. The following electrochemical reactions occur between transition metal fluorides and Li at a wide voltage range (0-4.3V), besides the formation of the solid electrolyte interphase (SEI) film and intermediate Li transition metal fluorides in the cases of Ti, V, Fe (which form $Li_{0.5}sMF_3$):

| | |
|---|---|
| Discharge/insertion: | $MFn + nLi^+ + ne^- \rightarrow M + nLiF$ (I) - plateau region, |
| | $M/(LiF)n + Li^+ e^- \rightarrow i\text{-}(LiF)n\text{-}M$ (II) - slope region |
| Charge/extraction : | $Li\text{-}LiF\text{-}M - Li^+ - e^- \rightarrow M/(LiF)n$ (III) |
| | $M/(LiF)n - nLi^+ - ne^- \rightarrow MFn$ (IV) |

Here M represents any transition metal.

2. We propose that the extra capacity at the slope region for fluorides is mainly due to the interfacial charging of Li within the matrix of LiF/M, as illustrated in Fig. 10, rather than the formation of the SEI film (see reference 2). Fig. 9 illustrates the rate performance of the interfacial charge of Li in LiF/Ti nanocomposites. In this diagram 6C signifies 10 minutes, 3C signifies 20 minutes, 1C signifies one hour and 0.5C signifies two hours. It can be seen from this diagram that high capacities are achievable even at fast discharge rates. This makes the electrode materials particularly useful for use in a supercapacitor.

3. Microstructure of the products in the reaction (I) and (II) is amorphous, which may indicate an atomic-scale dispersion of metal and LiF. This is a key factor for the extraction of Li from LiF.

4. The reversibility of the reaction (IV) is related to metal type and conductive additive (kinetic problem).

Example 7

In this example the cathode comprised a LiX-M amorphous nano- composite where:

Li is lithium,
X is fluorine and
M is the transition metal Ti. The transition metal in initially metallic form, in the form of metal clusters and the LiF, Ti, CB (ratio LiF : Ti : CB: PVDF = 3 : 1 : 0.5: 0.5) are dispersed at a nanometer scale with an average particle size of 1-10 nm for LiF and Ti, 10-40 nm for CB and 1 to 10$\mu$m for GP to provide a highly reversible lithium storage behaviour.

The mixture was applied as a paste to a Ti foil. The anode was lithium and the same electrolyte was used as in all examples. The reversible capacity obtained was 150 mAh/g in a voltage range of 0-1.2 V.

Example 8

Here example 7 was repeated but without using CB or GP (LiF: Ti: PVDF= 3:1:0.5). LiF and Ti are dispersed at nanoscale. The reversible capacity was 70 mAh/g in a range of 0-1.2 V. Rate performance is shown in Fig.9. It can be seen the rate performance is quite good even without conductive additive.

Further tests have been carried out using other electrolytes of the various kinds described in the introduction to this application and these tests show that electrode materials described here work well with all these different electrolytes. Furthermore, additional tests have been carried out using different transition metals and different conductive additives in the forms specified in claims 1 and 4 which confirm that the invention works with all the transition metals and conductive additives. Also different halides of the transition metals have been shown to be effective.

Further background information can be found from the following documents:


1. P. Poizot, S. Laruelle, S. Grugeon, L. Dupont, J. M. Tarascon, Nature, 407, 496(2000)
2. S. Laruelle, S. Grugeon, P. Poizot, M. Dolle, L. Dupont, J-M. Tarascon, J. Electrochem. Soc., 149, A627 (2002)
3. H. Li, L. H. Shi, W. Lu, X. J. Huang, L. Q. Chen, J. Electrochem. Soc. 148, A915 (2001).
4. H. Li, Y. Mo, N. Pei, X. Xu, X. J. Huang and L. Q. Chen in J. Phys. Chem. B, 104, 8477(2000)
5. H. Li, L. H. Shi, W. Lu, X. J. Huang, L. Q. Chen, J. Electrochem. Soc 148, A915 (2001)
6. H. Arai, S.Okada, Y. Sakurai, J. Yamaki, J. Power Sources, 69, 716 (1997)
7. H. Li, L. H. Shi, X. J. Huang, L. Q. Chen in PCT/CN01/00918


## Claims

**1.** An electrode for a Li-based electrochemical energy storage device, the electrode comprising an LiX-M amorphous composite or nano-composite where:

Li is lithium,
X is fluorine and
M is any transition metal in initially metallic form, the transition metal being in the form of metal clusters and the metal clusters and the LiX being dispersed at an atomic scale or at a nanometer scale to provide a highly reversible lithium storage behaviour.

**2.** An electrode in accordance with claim 1, the electrode comprising a transition metal chosen from the group comprising Ti, V, Cr, Ni, Mn, Fe, Co, Cu.

**3.** A Li-based electrochemical storage device comprising positive and negative electrodes and an electrolyte disposed between them, the electrolyte including a lithium salt, an organic, non-aqueous, anhydrous solvent or a polymer and at least one of the positive and negative electrodes comprising an LiX-M amorphous composite or nano-composite where:

Li is lithium,
X is fluorine and
M is any transition metal in initially metallic form.

**4.** A Li-based electrochemical storage device in accordance with claim 3 wherein it is realised as one of a rechargeable battery and a supercapacitor.

## Patentansprüche

**1.** Elektrode für eine elektrochemische Energiespeichervorrichtung auf Li-Basis, wobei die Elektrode einen amorphen LiX-M-Verbundstoff oder -Nanoverbundstoff umfasst, wobei:

Li Lithium ist,
X Fluor ist, und
M ein Übergangsmetall in anfänglich metallischer Form ist, wobei das Übergangsmetall in der Form von Metallclustern vorliegt und die Metallcluster und das LiX in einem atomaren Maßstab oder einem Nanometermaßstab dispergiert sind, um ein stark reversibles Lithiumspeicherverhalten bereitzustellen.

2. Elektrode nach Anspruch 1,
wobei die Elektrode, die ein Übergangsmetall umfasst, aus der Gruppe gewählt ist, die umfasst: Ti, V, Cr, Ni, Mn, Fe, Co, Cu.

3. Elektrochemische Speichervorrichtung auf Lithiumbasis, mit einer positiven und negativen Elektrode und einem zwischen diesen angeordneten Elektrolyt, wobei der Elektrolyt ein Lithiumsalz, ein organisches, nicht wässriges, wasserfreies Lösemittel oder ein Polymer aufweist, und zumindest eine der positiven und negativen Elektrode einen amorphen LiX-M-Verbundstoff oder -Nanoverbundstoff umfasst, wobei:

   Li Lithium ist,
   X Fluor ist, und
   M ein Übergangsmetall in anfänglich metallischer Form ist.

4. Elektrochemische Speichervorrichtung auf Li-Basis nach Anspruch 3,
wobei sie als eine wiederaufladbare Batterie oder ein Superkondensator realisiert ist.

**Revendications**

1. Électrode pour un appareil de stockage d'énergie électrochimique à base de Li, l'électrode comprenant un composite amorphe LiX-M ou un nanocomposite dans lequel :

   Li est le lithium
   X est un composé fluoré, et
   M est un quelconque métal de transition sous forme initialement métallique, le métal de transition étant sous la forme d'amas de métal et les amas de métal et le LiX étant dispersés à échelle atomique ou à échelle nanométrique pour présenter un comportement de stockage du lithium hautement réversible.

2. Électrode selon la revendication 1, ladite électrode comprenant un métal de transition choisi parmi le groupe comprenant Ti, V, Cr, Ni, Mn, Fe, Co, Cu.

3. Appareil de stockage électrochimique à base de Ti comprenant des électrodes positives et négatives et un électrolyte disposé entre elles, l'électrolyte incluant un sel de lithium, un solvant organique, non aqueux, anhydre ou un polymère, et l'une au moins des électrodes positives et négatives comprenant un composite amorphe LiX-M ou un nanocomposite, dans lequel :

   Li est le lithium,
   X est un composé fluoré, et
   M est un quelconque métal de transition sous forme initialement métallique.

4. Appareil de stockage électrochimique à base de Li selon la revendication 3, celui-ci étant réalisé soit comme batterie rechargeable soit comme supercapacité.

FIG. 1

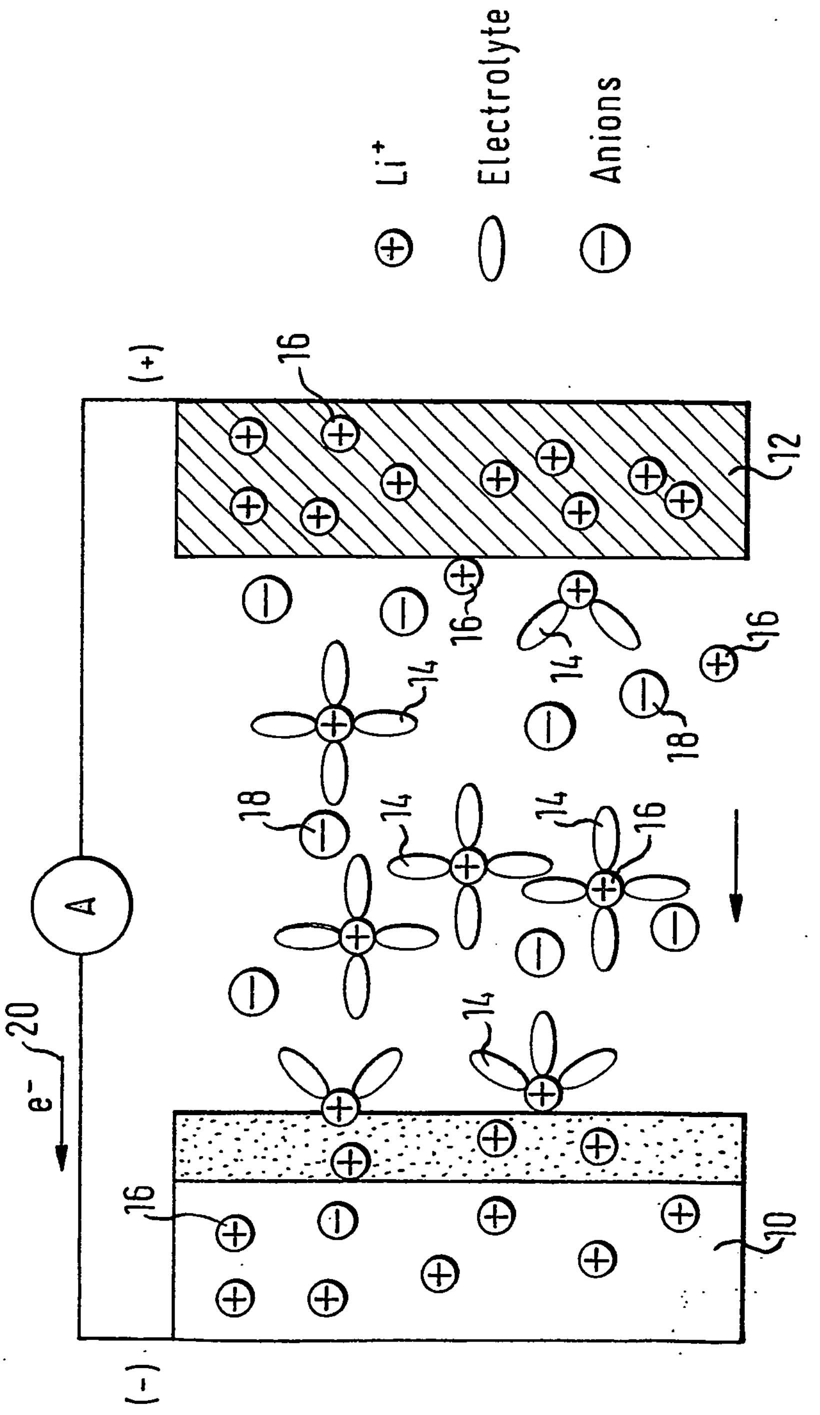

FIG. 2A

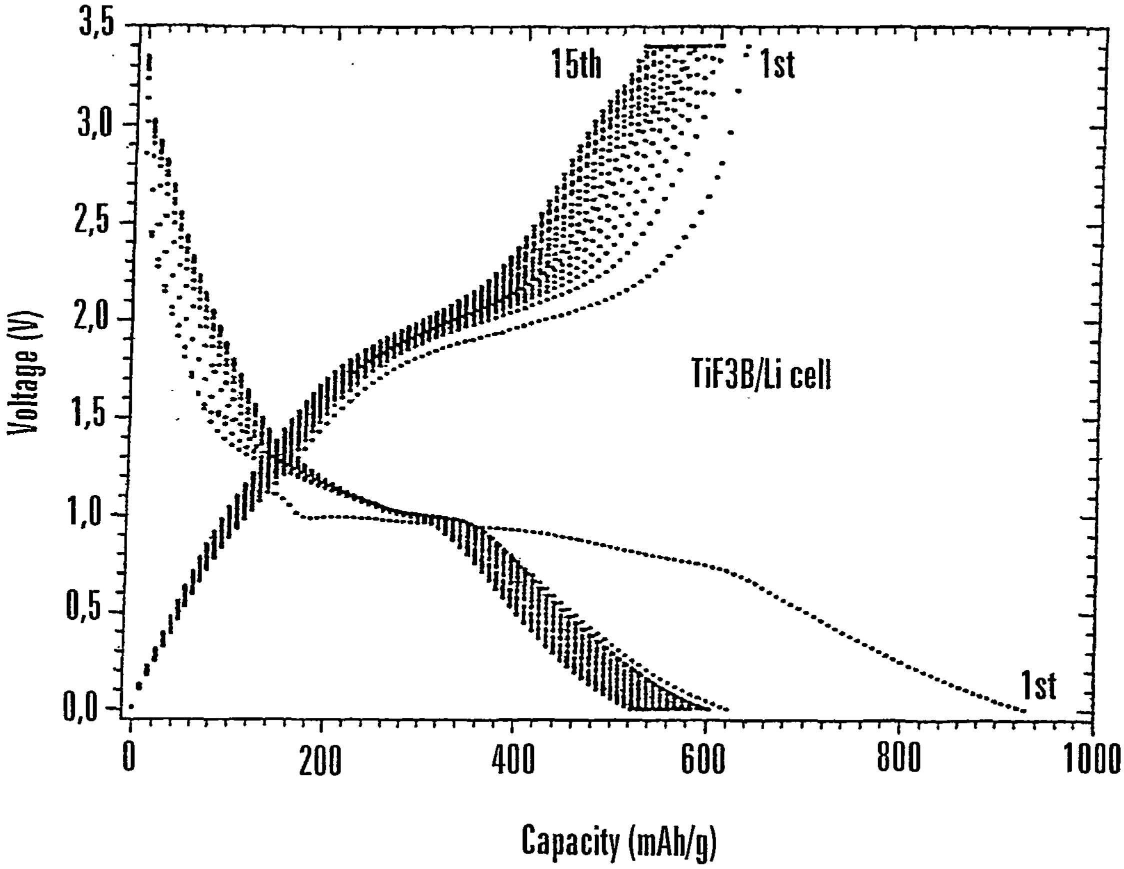
3,5
3,0
2,5
2,0
1,5
1,0
0,5
0,0
Voltage (V)
0
200
400
600
800
1000
Capacity (mAh/g)
15th
1st
TiF3B/Li cell
1st

FIG. 2B

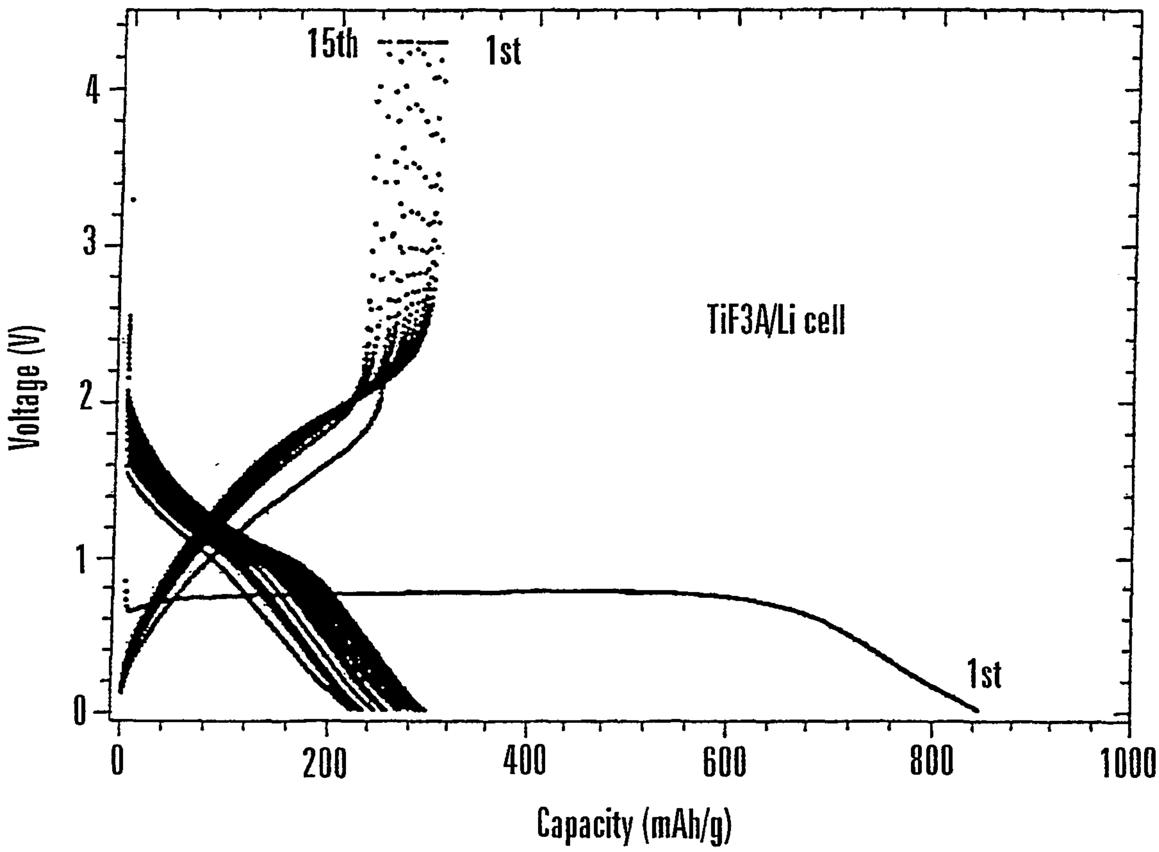
15th
1st
TiF3A/Li cell
1st
Voltage (V)
0
1
2
3
4
0
200
400
600
800
1000
Capacity (mAh/g)

FIG. 2C

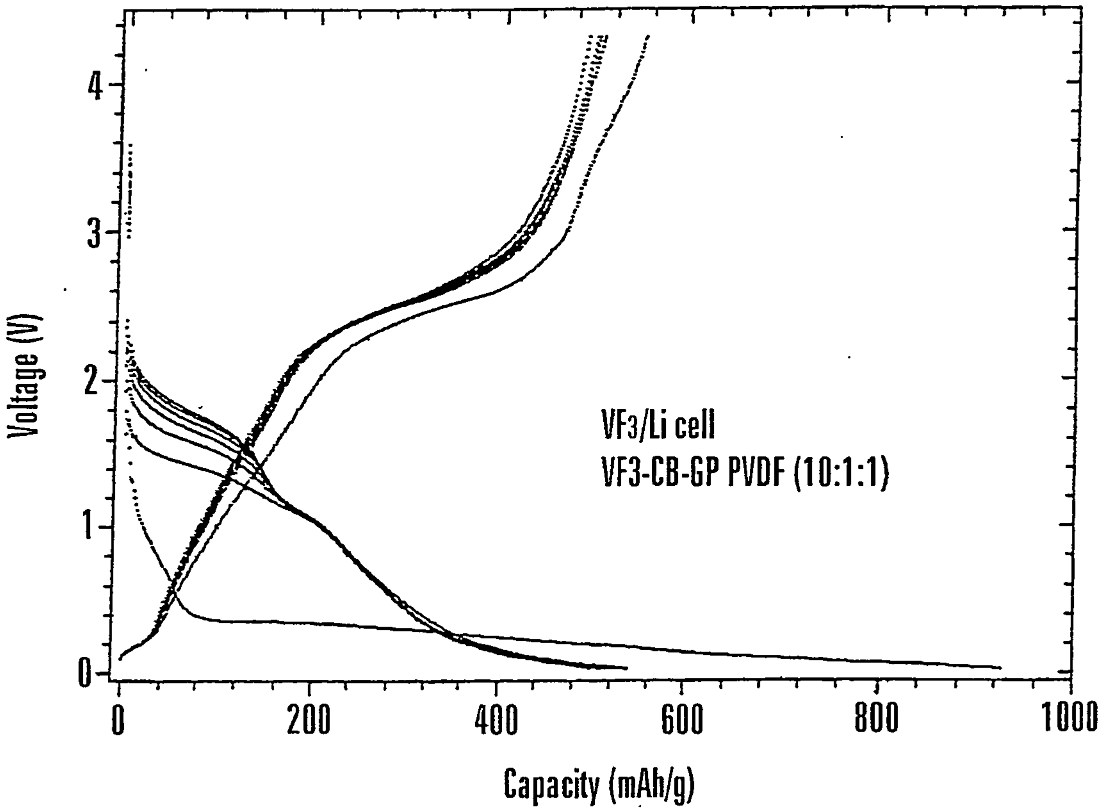
Voltage (V)
0
1
2
3
4
0
200
400
600
800
1000
Capacity (mAh/g)
VF3/Li cell
VF3-CB-GP PVDF (10:1:1)

FIG. 2D

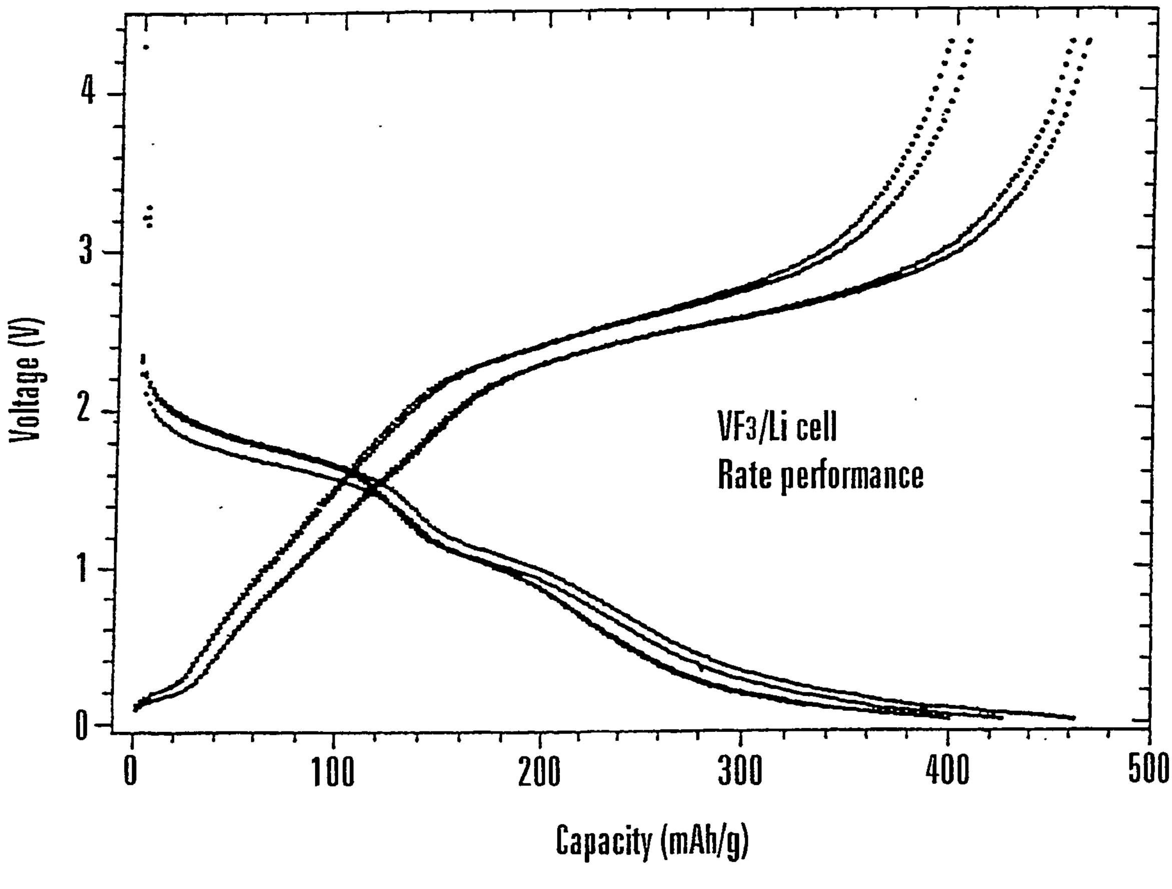
Voltage (V)
Capacity (mAh/g)
VF3/Li cell
Rate performance
0
1
2
3
4
0
100
200
300
400
500

FIG. 2E

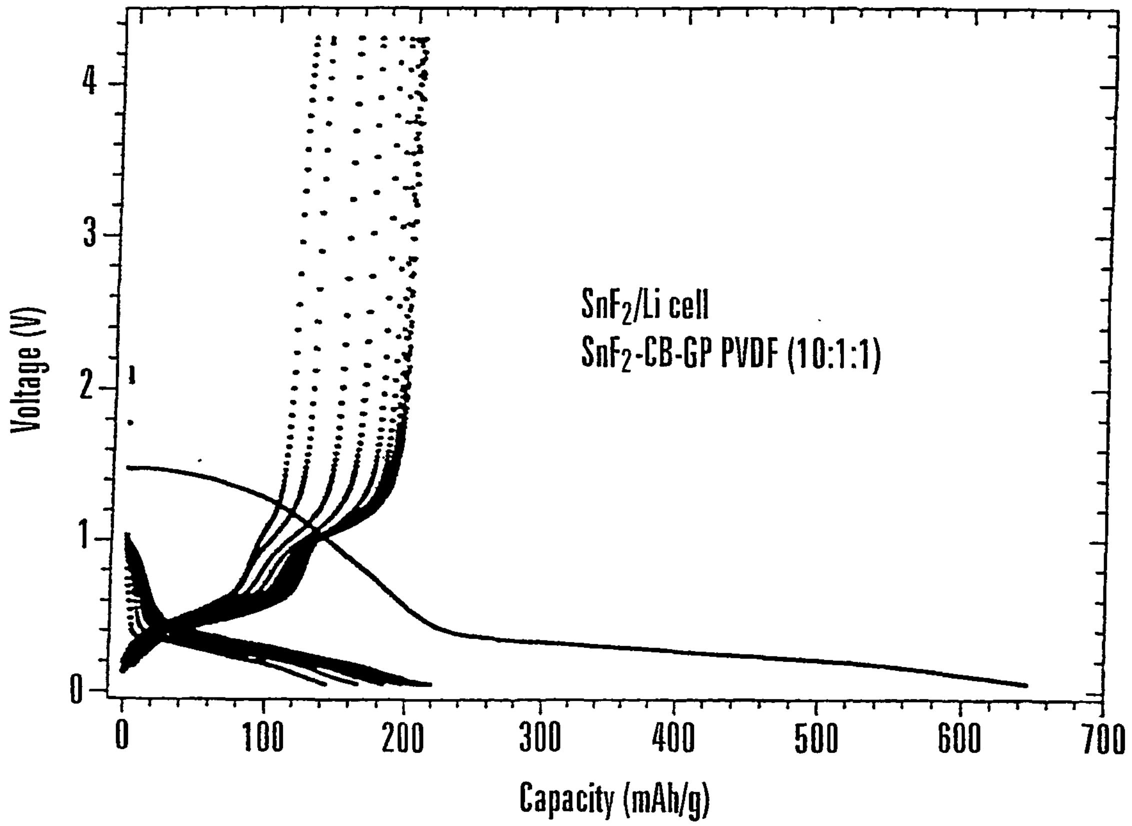
SnF2/Li cell
SnF2-CB-GP PVDF (10:1:1)
Voltage (V)
Capacity (mAh/g)
0
1
2
3
4
0
100
200
300
400
500
600
700

FIG. 2F

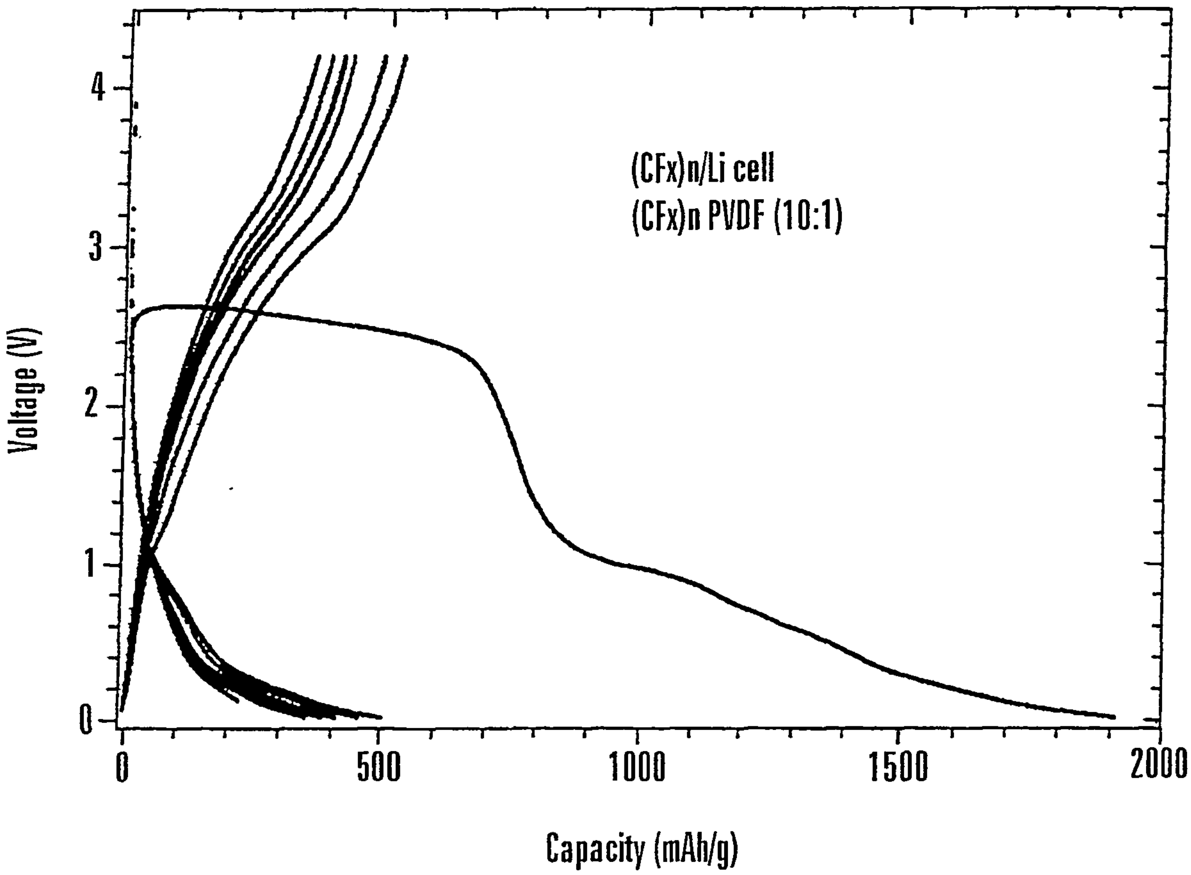
(CFx)n/Li cell
(CFx)n PVDF (10:1)
Voltage (V)
0
1
2
3
4
0
500
1000
1500
2000
Capacity (mAh/g)

FIG. 3

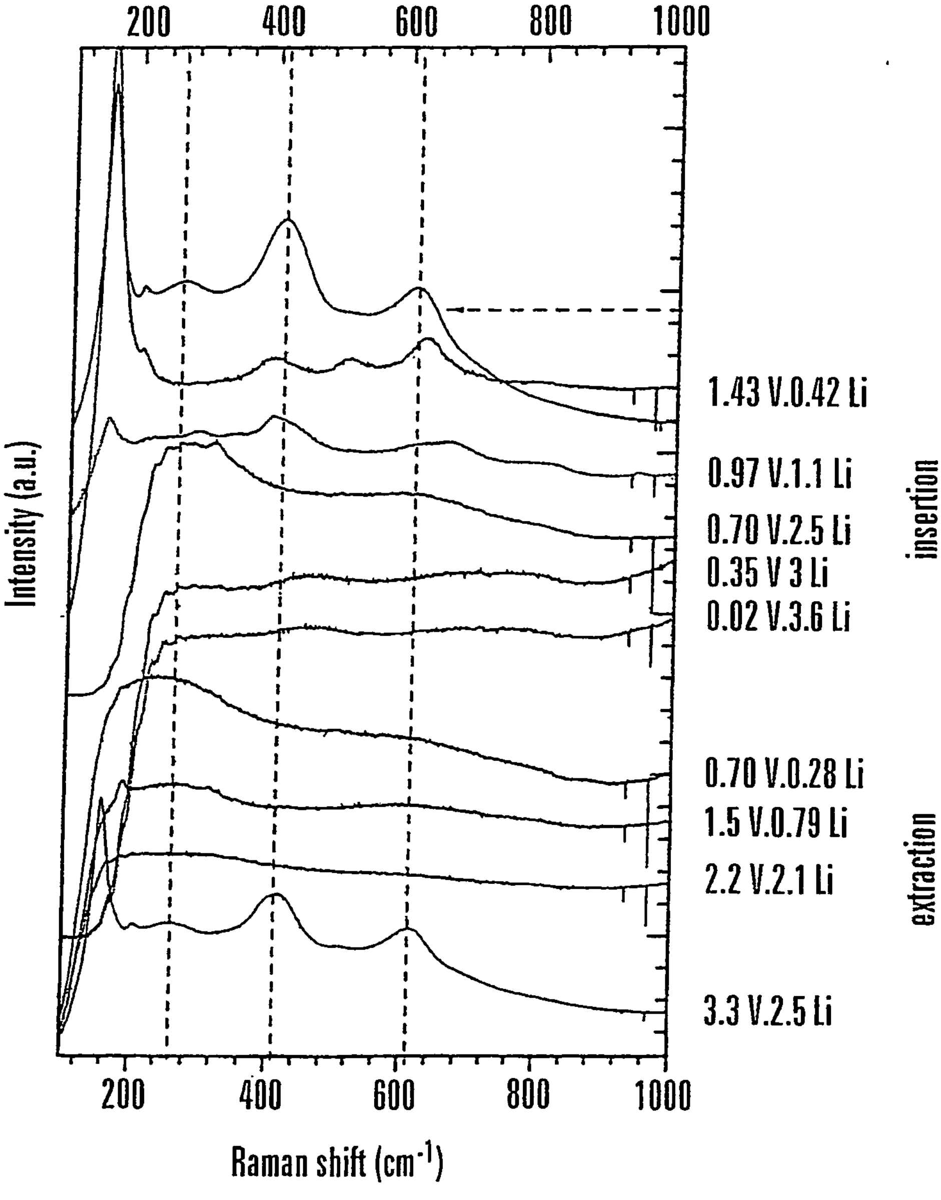
200
400
600
800
1000
Intensity (a.u.)
1.43 V.0.42 Li
0.97 V.1.1 Li
0.70 V.2.5 Li
0.35 V 3 Li
0.02 V.3.6 Li
insertion
0.70 V.0.28 Li
1.5 V.0.79 Li
2.2 V.2.1 Li
3.3 V.2.5 Li
extraction
Raman shift ($cm^{-1}$)

FIG. 4A

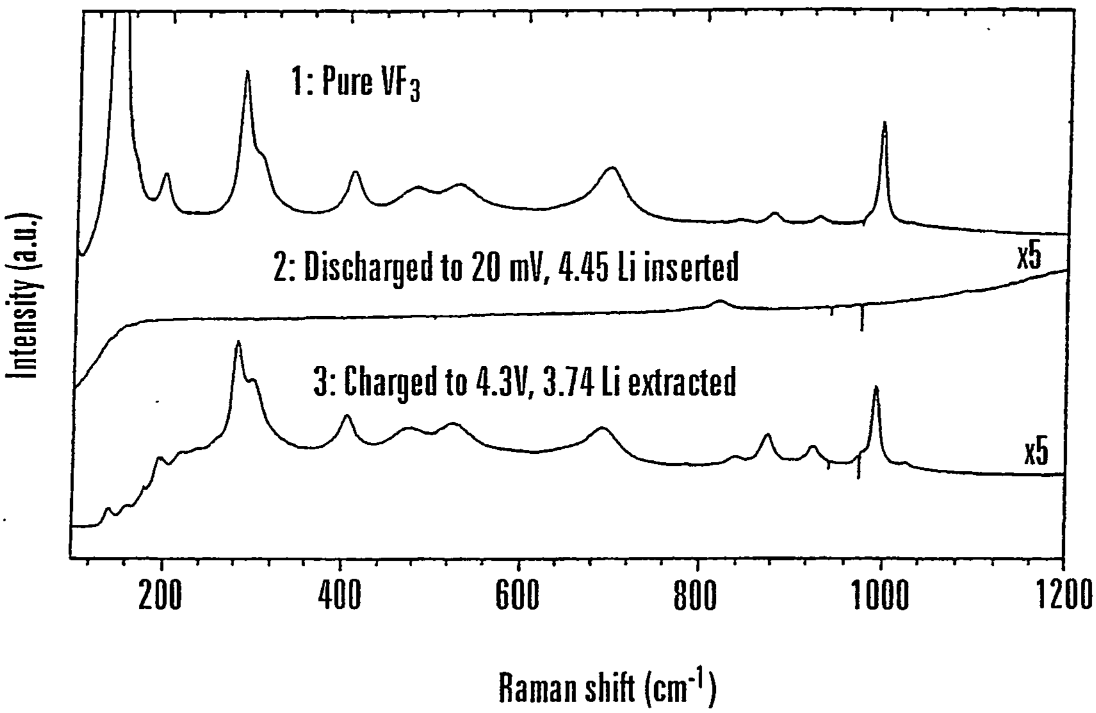
1: Pure $VF_3$
2: Discharged to 20 mV, 4.45 Li inserted
x5
3: Charged to 4.3V, 3.74 Li extracted
x5
Intensity (a.u.)
200
400
600
800
1000
1200
Raman shift ($cm^{-1}$)

FIG. 4B

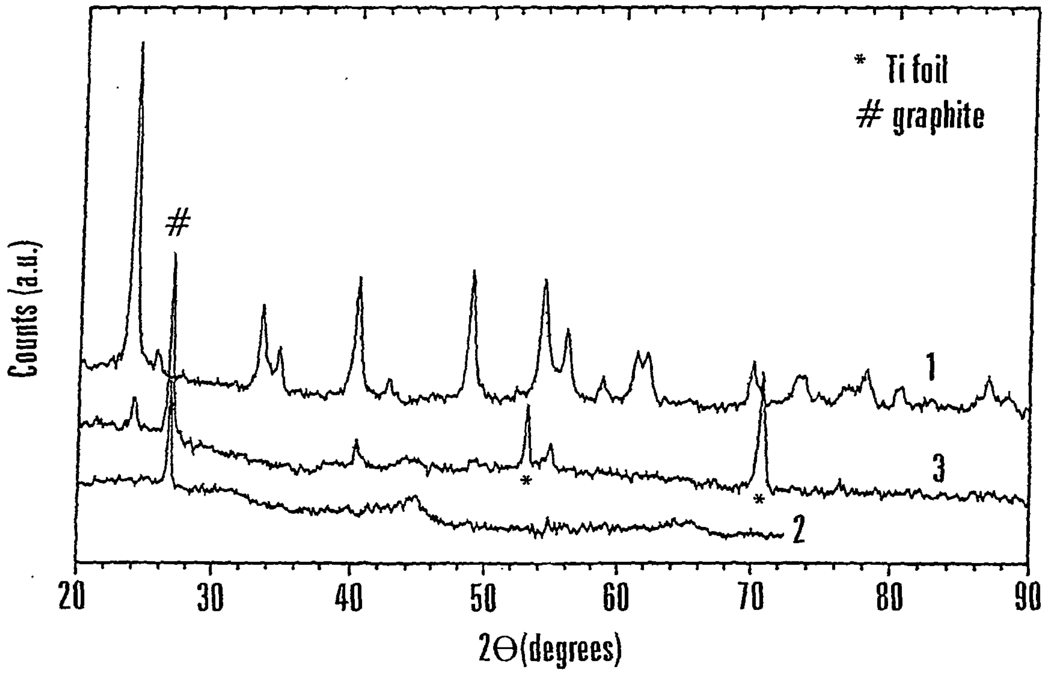
* Ti foil
# graphite
#
*
*
1
3
2
Counts (a.u.)
20
30
40
50
60
70
80
90
2Θ(degrees)

FIG 5A

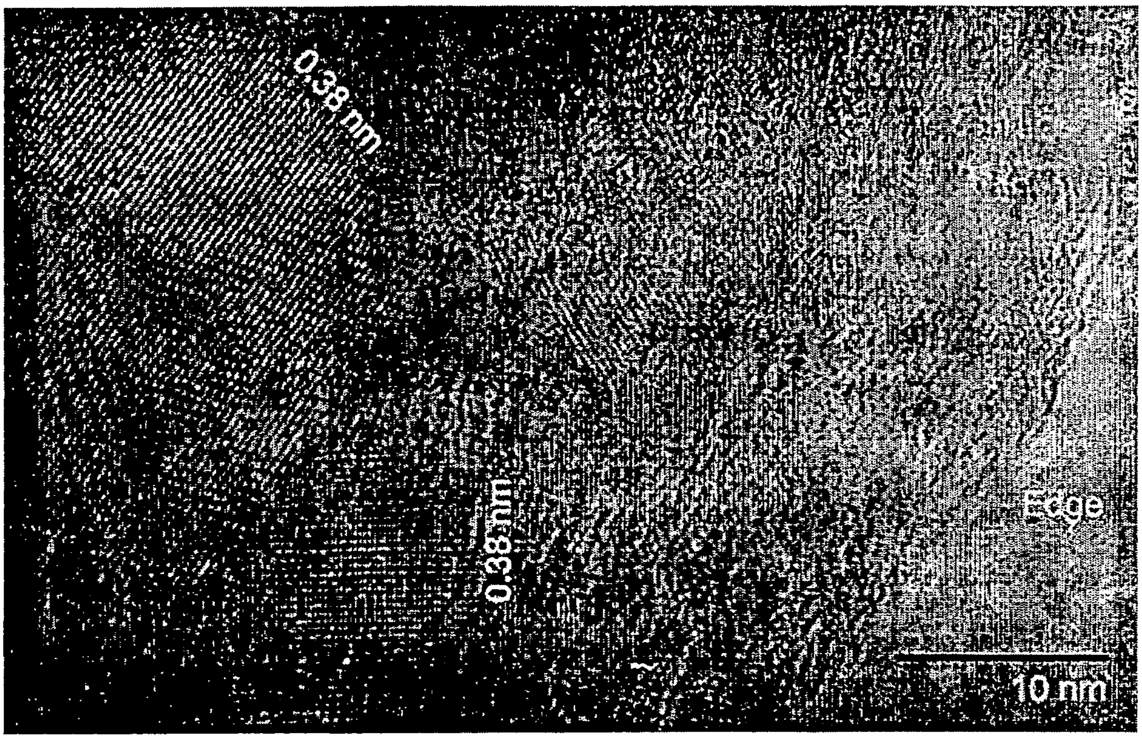

FIG 5B

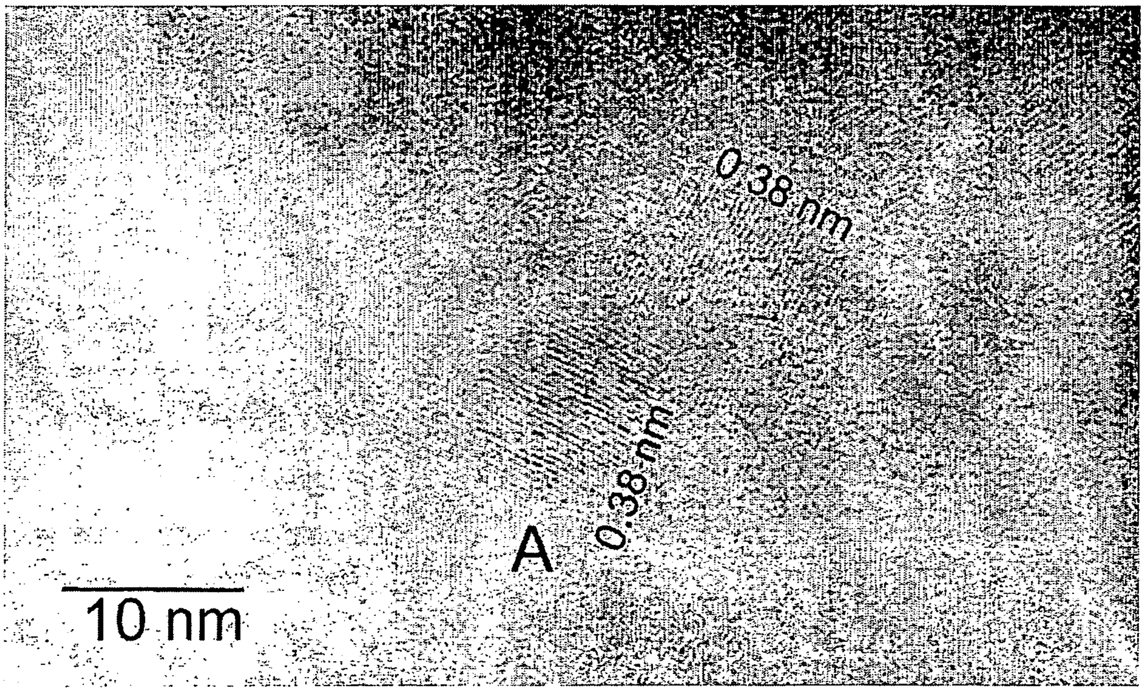

FIG 5C

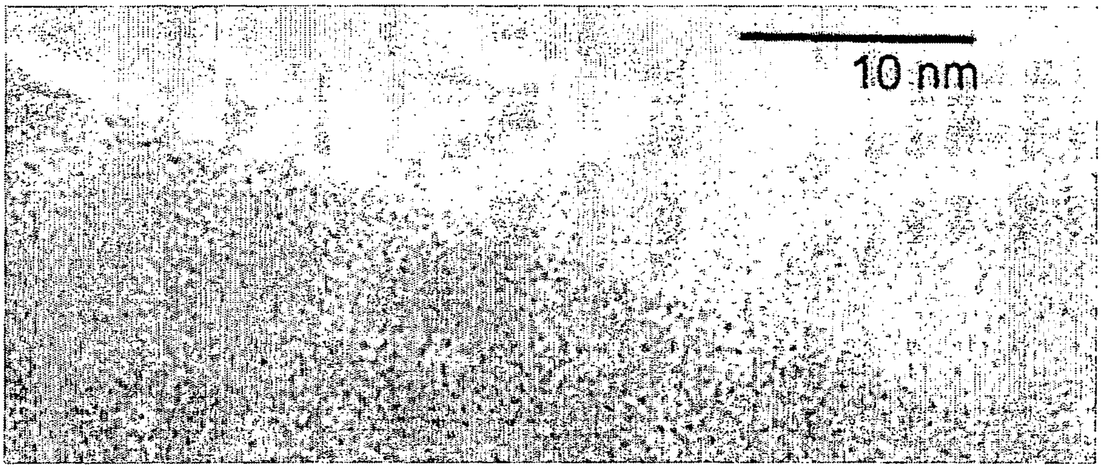

FIG 5D

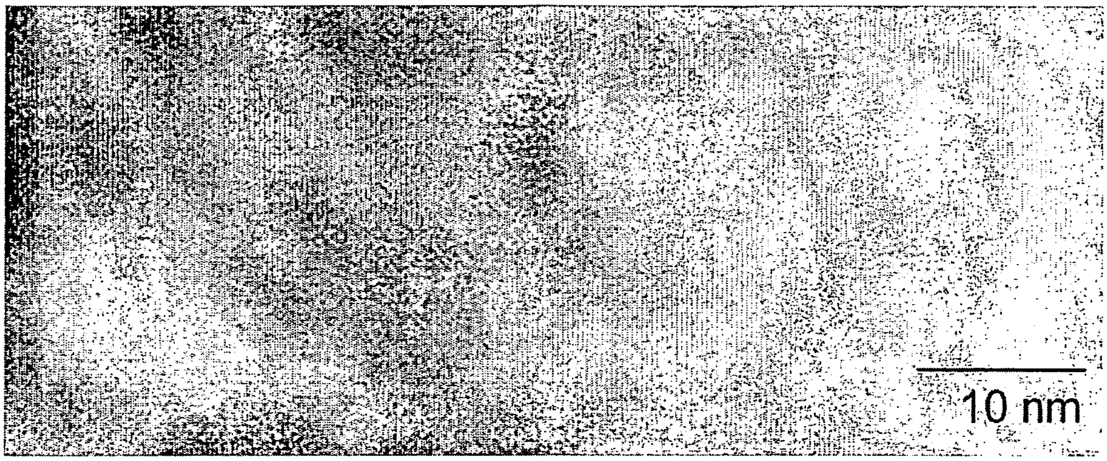

FIG 5E

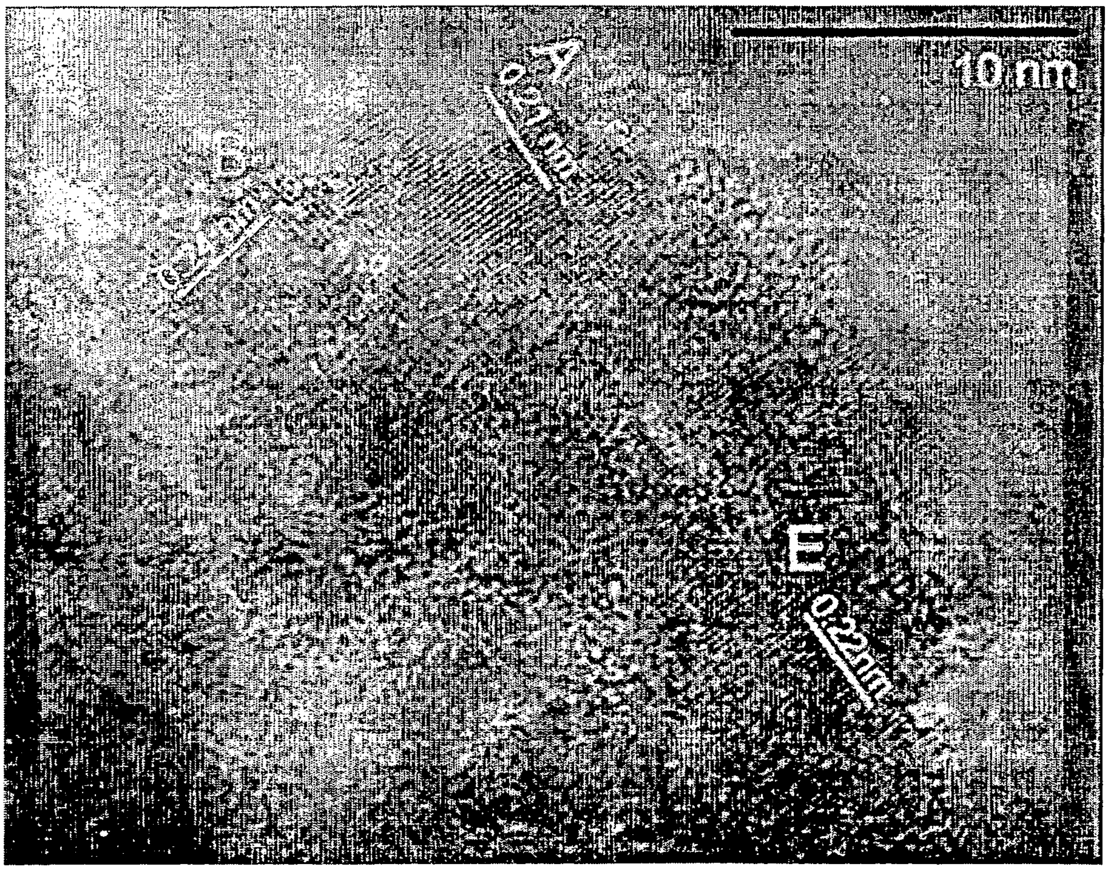

FIG. 6

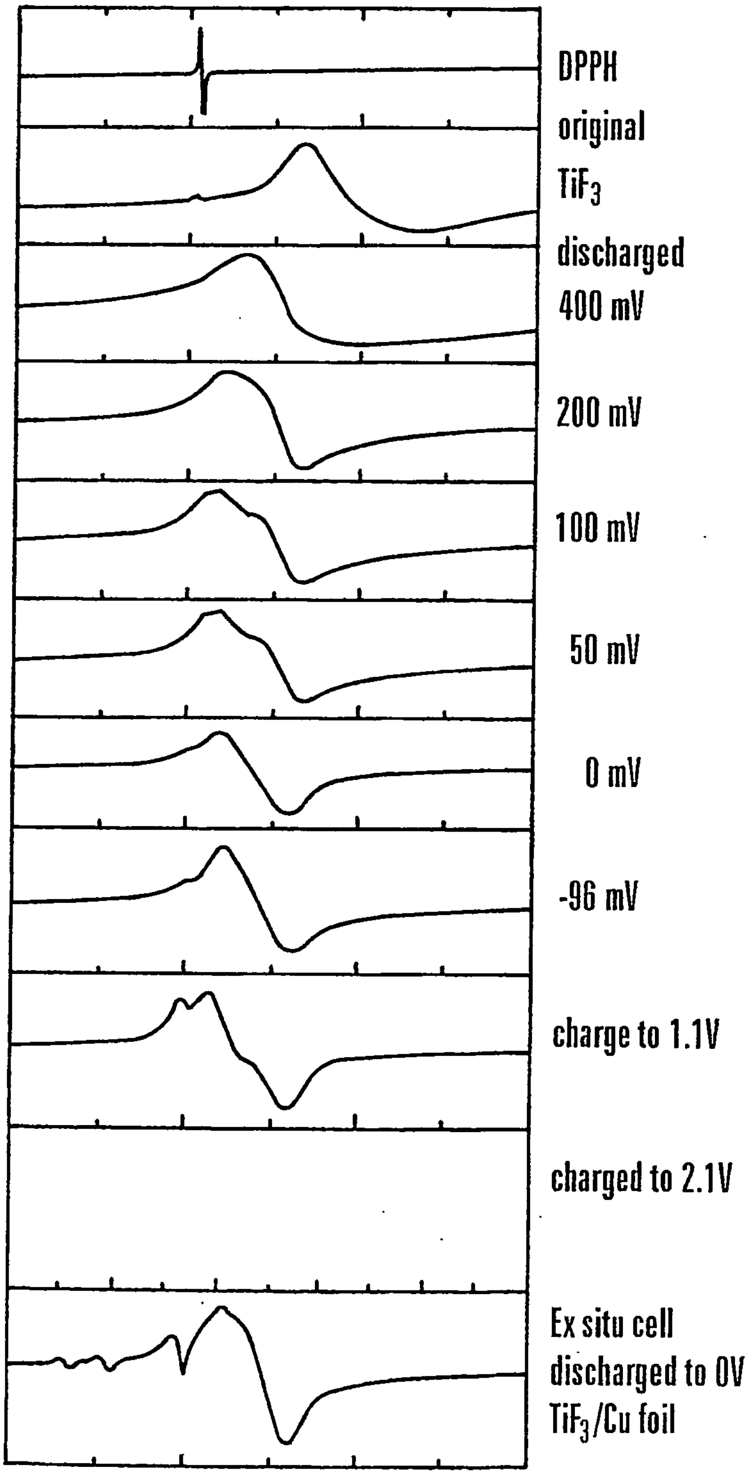
DPPH
original
$TiF_3$
discharged
400 mV
200 mV
100 mV
50 mV
0 mV
-96 mV
charge to 1.1V
charged to 2.1V
Ex situ cell
discharged to 0V
$TiF_3$/Cu foil

FIG. 7

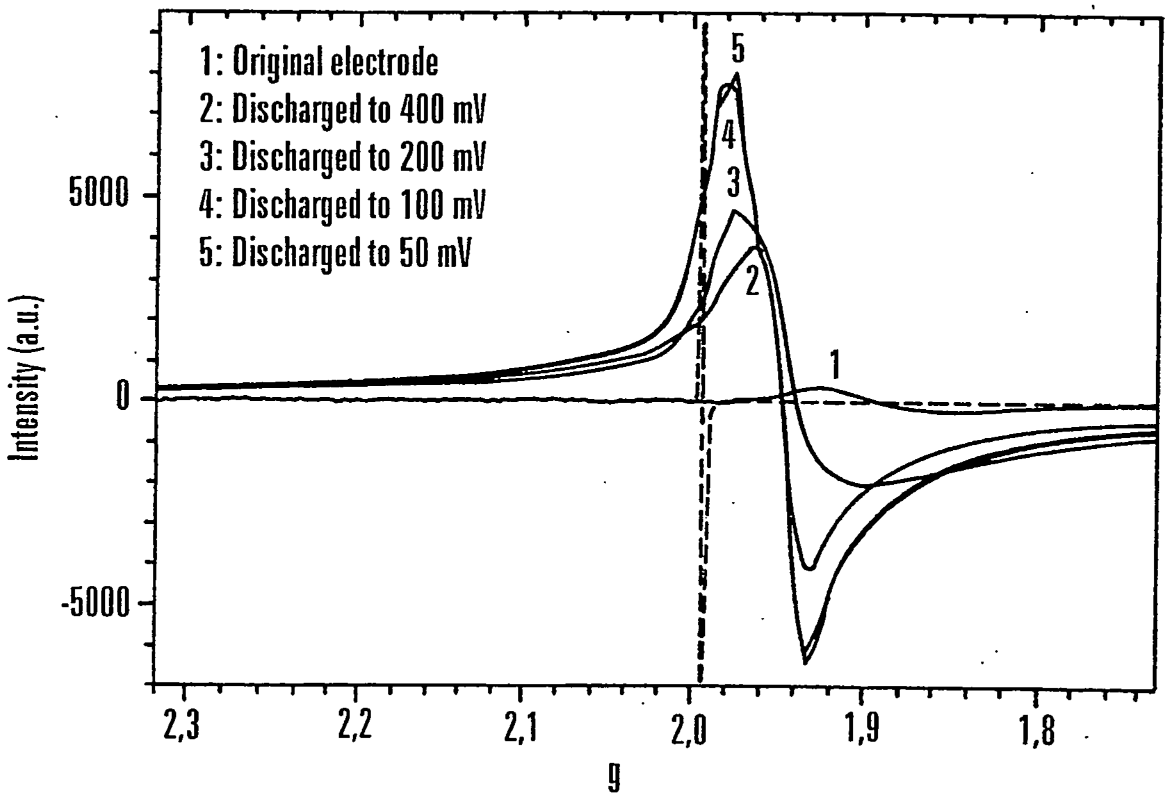
1: Original electrode
2: Discharged to 400 mV
3: Discharged to 200 mV
4: Discharged to 100 mV
5: Discharged to 50 mV
Intensity (a.u.)
5000
0
-5000
2,3
2,2
2,1
2,0
1,9
1,8
g
1
2
3
4
5

FIG. 8

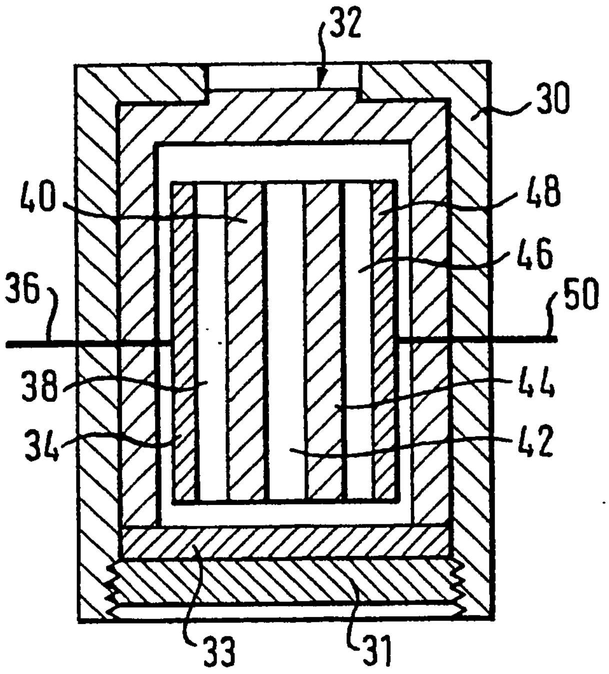
32
30
40
48
46
36
50
38
44
34
42
33
31

FIG. 9

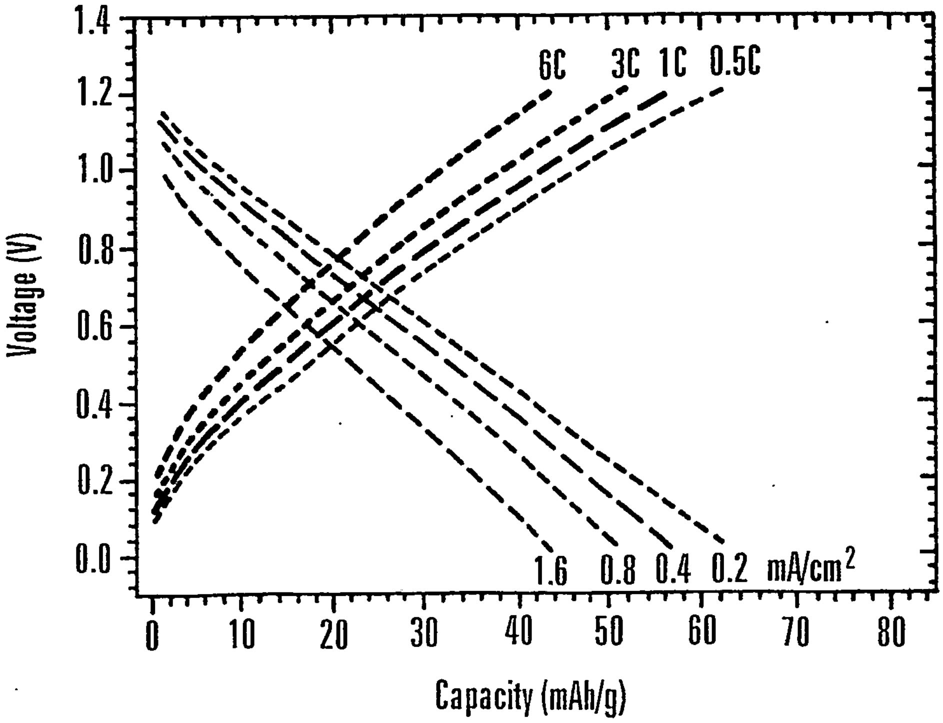
1.4
1.2
1.0
0.8
0.6
0.4
0.2
0.0
Voltage (V)
6C 3C 1C 0.5C
1.6 0.8 0.4 0.2 mA/cm2
0 10 20 30 40 50 60 70 80
Capacity (mAh/g)

FIG. 10

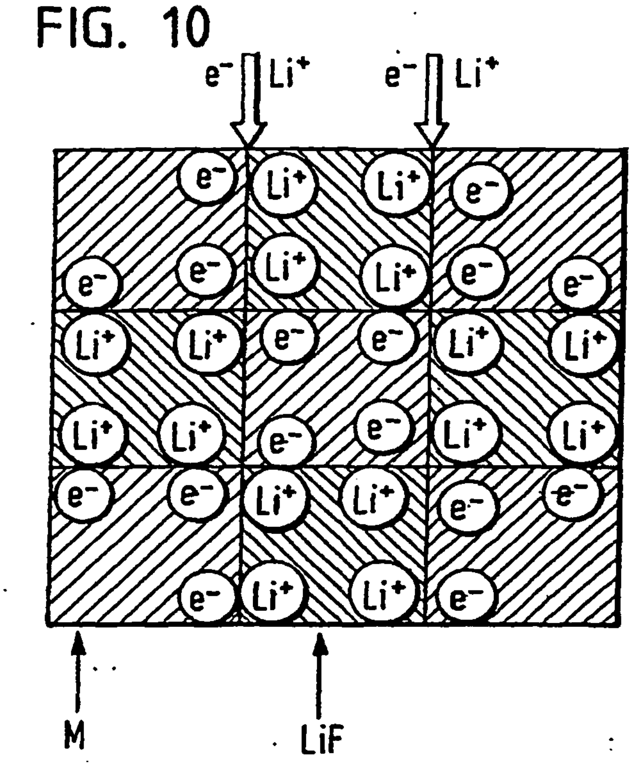

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 1505680 A
- JP 2000128539 A
- EP 0817294 A
- JP 2001110447 A
- JP 2000106174 A
- US 6346348 B
- JP 8279357 A
- JP 10321228 A
- WO 9949929 A
- WO 9940029 A
- CN 0100918 W, H. Li, L. H. Shi, X. J. Huang, L. Q. Chen


### Non-patent literature cited in the description


- **H. Li ; L. H. Shi ; W. Lu ; X. J. Huang ; L. Q. Chen.** *J. Electrochem. Soc.,* 2001, vol. 148, A915
- **H. Li ; X. J. Huang ; L. Q. Chen.** *Electrochem. Solid State Lett.,* 1998, vol. 1, 241
- **H. Li ; Y. Mo ; N. Pei ; X. Xu ; X. J. Huang ; L. Q. Chen.** *J. Phys. Chem. B,* 2000, vol. 104, 8477
- **P. Poizot ; S. Laruelle ; S. Grugeon ; L. Dupont ; J. M. Tarascon.** *Nature,* 2000, vol. 407, 496
- **S. Laruelle ; S. Grugeon ; P. Poizot ; M. Dolle ; L. Dupont ; J-M. Tarascon.** *J. Electrochem. Soc.,* 2002, vol. 149, A627
- **H. Li ; L. H. Shi ; W. Lu ; X. J. Huang ; L. Q. Chen.** *J. Electrochem. Soc,* 2001, vol. 148, A915
- **H. Arai ; S.Okada ; Y. Sakurai ; J. Yamaki.** *J. Power Sources,* 1997, vol. 69, 716